# EUROPEAN PATENT APPLICATION

(11) **EP 4 654 175 A1**
(43) Date of publication of application: **26.11.2025**
(21) Application number: 23917636.5
(22) Date of filing: 16.11.2023
(51) Int. Cl.: G09C 5/00, H04L 9/32

(54) **NFT CONTENT PROCESSING PROGRAM, NFT CONTENT PROCESSING METHOD, AND NFT CONTENT PROCESSING DEVICE**

(30) Priority: 18.01.2023 JP 2023006093
(71) Applicant: FUJITSU LIMITED, Kawasaki-shi, Kanagawa 211-8588 (JP)
(72) Inventor: HIGASHIKADO, Yoshiki, Kawasaki-shi, Kanagawa 211-8588 (JP); YAMAOKA, Yuji, Kawasaki-shi, Kanagawa 211-8588 (JP); KOJIMA, Rikuhiro, Kawasaki-shi, Kanagawa 211-8588 (JP)
(74) Representative: Hoffmann Eitle
(86) International application number: PCT/JP2023/041311
(87) International publication number: WO 2024/154424

(57) **Abstract**

Illegal registration of digital art is easily suppressed.

An NFT content processing program of an embodiment causes a computer to execute: processing of, when receiving a registration request including first NFT content to be registered and identification information for identifying the first NFT content, generating second NFT content in which the first NFT content is reversibly watermarked with the identification information based on a predetermined first key by using a first algorithm; processing of registering the generated NFT content; processing of, when receiving a verification request including third NFT content to be verified, restoring identification information added as a watermark to the third NFT content from the third NFT content based on the first key by using the first algorithm; and processing of making a notification of a verification result based on the restoration of the identification information added as a watermark to the third NFT content.

## Description

### [Technical Field]

Embodiments of the present invention relate to an NFT content processing program, an NFT content processing method, and an NFT content processing device.

### [Background Art]

In recent years, digital art (hereinafter, also referred to as an original image) such as a photograph and an image has been regarded as an asset that can be uniquely identified by using a non-fungible token (NFT) based on a blockchain (BC) and has been traded on an NFT marketplace (hereinafter, referred to as a marketplace) such as Opensea.

In this marketplace, an NFT of an image duplicated from the original image may be illegally registered (hereinafter, also referred to as multiply registered) because the original image can be easily duplicated as a characteristic of digital data. As a related art for preventing such illegal registration, there is a technique of, when minting a new NFT to register an image (digital art), collating the image with all registered images and preventing the image from being registered when the image matches with any of the registered images.

### [Citation List]

### [Patent Citation]

### Patent Documents

Patent Document 1: Japanese Laid-open Patent Publication No. 2000-298689
Patent Document 2: U.S. Patent Application Publication No. 2006/0053077
Patent Document 3: Japanese Laid-open Patent Publication No. 2002-7977
Patent Document 4: U.S. Patent Application Publication No. 2002/0069171

### [Summary of Invention]

### [Technical Problem]

However, the above related art performs collation with all registered images and thus is problematic in that computer resources and time are greatly consumed.

In one aspect, an object is to provide an NFT content processing program, an NFT content processing method, and an NFT content processing device capable of easily suppressing illegal registration of digital art.

### [Solution to Problem]

In one aspect, an NFT content processing program causes a computer to execute processing of: generating; registering; restoring; and making a notification. The generating is, when receiving a registration request including first NFT content to be registered and identification information (NFT_ID) for identifying the first NFT content, generating second NFT content in which the first NFT content is reversibly watermarked with the identification information based on a predetermined first key by using a first algorithm. The registering is registering the generated NFT content. The restoring is, when receiving a verification request including third NFT content to be verified, restoring identification information added as a watermark to the third NFT content from the third NFT content based on the first key by using the first algorithm. The making a notification is making a notification of a verification result based on the restoration of the identification information added as a watermark to the third NFT content.

### [Advantageous Effects of Invention]

It is possible to easily suppress illegal registration of digital art.

### [Brief Description of Drawings]

FIG. 1 is an explanatory diagram illustrating an overview of an embodiment.
FIG. 2 is an explanatory diagram illustrating an overview of an operation of an image processing device according to the embodiment.
FIG. 3 is an explanatory diagram illustrating an overview of an operation of the image processing device according to the embodiment.
FIG. 4 is a block diagram illustrating a functional configuration example of the image processing device according to the embodiment.
FIG. 5 is a flowchart illustrating an operation example of the image processing device according to the embodiment.
FIG. 6 is a flowchart illustrating an operation example of the image processing device according to the embodiment.
FIG. 7 is an explanatory diagram illustrating generation of a JPEG image in which watermark information is embedded.
FIG. 8 is an explanatory diagram illustrating image blocking.
FIG. 9 is an explanatory diagram illustrating insertion of watermark information into an image.
FIG. 10 is a flowchart illustrating a processing example related to creation of a watermark image.
FIG. 11 is a flowchart illustrating a processing example related to restoration of watermark information.
FIG. 12 is an explanatory diagram illustrating an example of a computer configuration.

### [Embodiments for Carrying Out the Invention]

Hereinafter, an NFT content processing program, an NFT content processing method, and an NFT content processing device according to embodiments will be described with reference to the drawings. In the embodiments, components having the same function are denoted by the same reference signs, and redundant description will be omitted. Note that the NFT content processing program, the NFT content processing method, and the NFT content processing device described in the following embodiments are merely examples and do not limit the embodiments. The following embodiments may be appropriately combined to the extent consistent.

### (Overview of Embodiment)

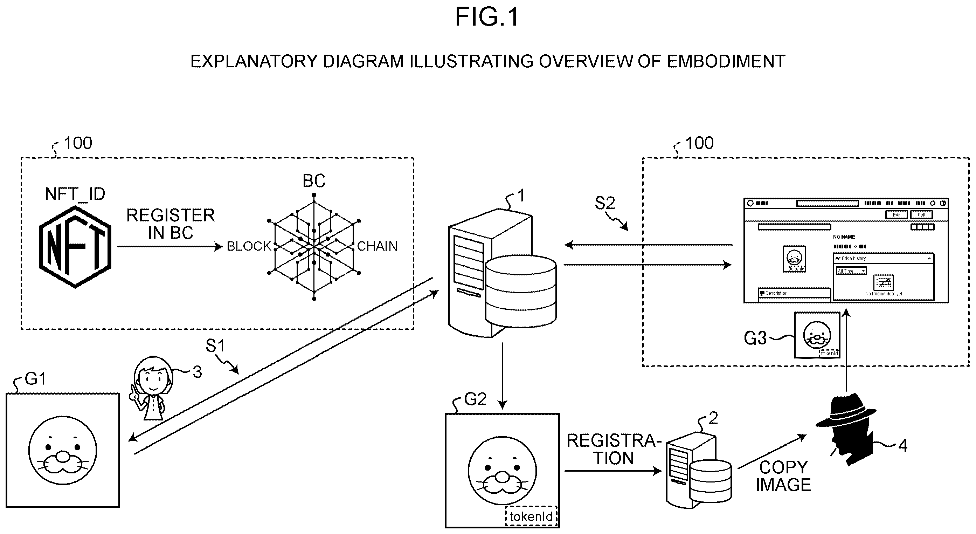

FIG. 1 is an explanatory diagram illustrating an overview of an embodiment. As illustrated in FIG. 1, an image processing device 1 is a server device that provides a function of supporting registration (S1) of an original image G1 created by a creator 3 and verification (S2) of whether or not a verification target image G3 is multiply registered in a marketplace 100.

In the registration (S1), in response to a registration request of the original image G1 from the creator 3, the marketplace 100 mints a blockchain BC, issues a new NFT, and registers NFT_ID that is identification information for uniquely identifying the original image G1 in the blockchain BC.

The NFT_ID is, for example, a combination of the blockchain BC, a contract address, and a token ID. At this time, the marketplace 100 notifies the image processing device 1 of the registration request including the original image G1 and the NFT_ID of the original image G1.

The image processing device 1 that has received the registration request generates a watermarked image G2 by reversibly watermarking the original image G1 with the NFT_ID by using a predetermined watermark algorithm (watermark algorithm A) and a key (hereinafter, first key) on the basis of the first key.

Note that the reversible watermark based on the key in the image means that it is possible to acquire (restore) information added as a watermark on the basis of the key.

The image processing device 1 registers the generated watermarked image G2 in an image database 2 for publication. Therefore, the watermarked image G2, which is obtained by watermarking the original image G1 with the NFT_ID, is opened to the public and is used for transactions in the marketplace 100.

The verification (S2) is performed prior to the registration (S1) in order to suppress illegal registration (multiple registration) of digital art. In the verification (S2), the marketplace 100 notifies the image processing device 1 of a verification request including the verification target image G3 that is an image received at a registration site or the like. Note that the illustrated example indicates a case where an illegal registrant 4 intends to illegally register an image obtained by copying the watermarked image G2 opened to the public via the image database 2.

The image processing device 1 that has received the verification request restores information added as a watermark to the verification target image G3, that is, NFT_ID from the verification target image G3 by using the watermark algorithm A and the first key which are the same as those at the time of registration on the basis of the first key.

Here, in a case where the verification target image G3 is a copy of the watermarked image G2 opened to the public, the NFT_ID is obtained as a result of restoration. Conversely, in a case where the verification target image G3 is not a copy of the watermarked image G2 but a new one, the NFT_ID is not obtained, and a restoration error (meaningless data that is not NFT_ID) is obtained as a result of restoration. The image processing device 1 notifies the marketplace 100 of the result of the restoration as a verification result.

The marketplace 100 determines the presence or absence of illegal registration (multiple registration) of the verification target image G3 on the basis of the verification result notified from the image processing device 1. Specifically, in a case where the NFT_ID can be restored, the marketplace 100 regards the verification target image as being illegally registered (multiply registered), whereas in a case where the NFT_ID is not restored, the marketplace 100 regards the verification target image as being legally (newly) registered.

As described above, the image processing device 1 uses whether or not NFT_ID can be restored from the verification target image G3 by using the watermark algorithm A and the first key which are the same as those at the time of registration as a verification result of illegal registration and thus can easily suppress illegal registration without performing processing of greatly consuming computer resources and time for collation with all registered images.

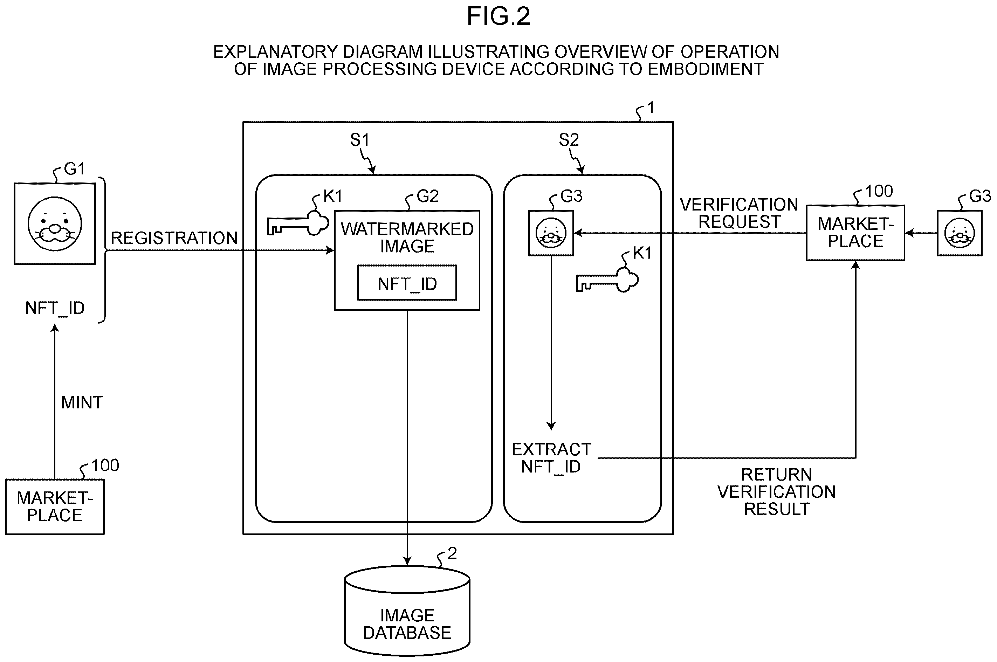

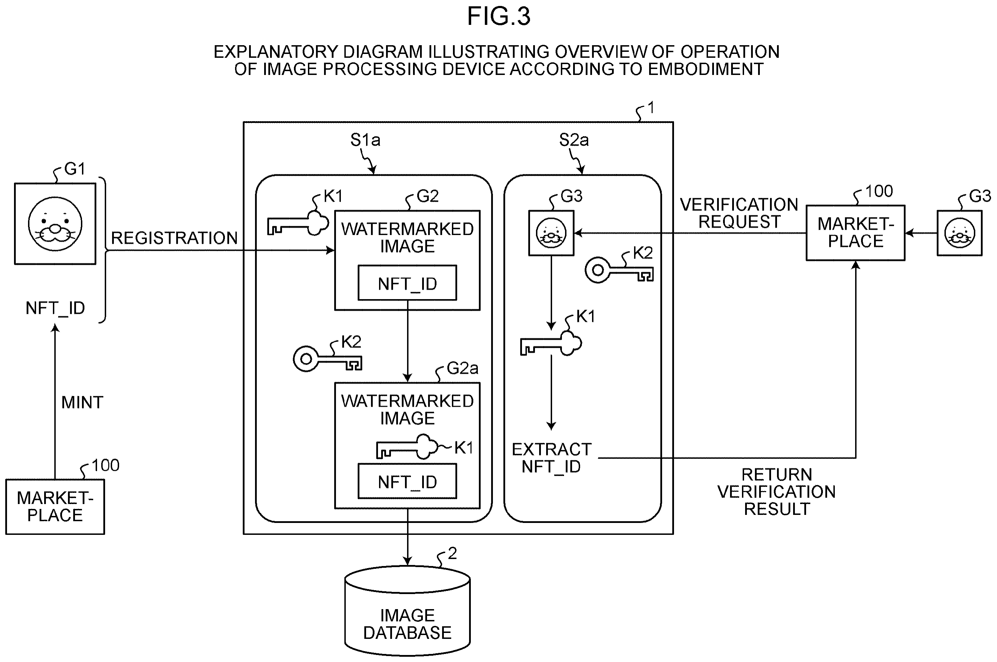

FIGS. 2 and 3 are explanatory diagrams illustrating an overview of an operation of the image processing device 1 according to the embodiment. As illustrated in FIG. 2, in the registration (S1), the image processing device 1 receives a registration request including the original image G1 and the NFT_ID of the original image G1 from the marketplace 100. Then, the image processing device 1 generates the watermarked image G2 by reversibly watermarking the original image G1 with the NFT_ID on the basis of a preset first key K1 by using the watermark algorithm A. Then, the image processing device 1 registers the generated watermarked image G2 in the image database 2.

In the verification (S2), the image processing device 1 receives a verification request including the verification target image G3 from the marketplace 100. Then, the image processing device 1 restores information (NFT_ID) added as a watermark to the verification target image G3 from the verification target image G3 on the basis of the first key K1 by using the watermark algorithm A. Then, the image processing device 1 returns a result of this restoration as a verification result to the marketplace 100.

The image processing device 1 may insert not only one watermark by using the watermark algorithm A and the first key K1, but also a watermark by using a predetermined watermark algorithm (hereinafter, watermark algorithm B) and a key (hereinafter, second key K2), which are different from the watermark algorithm A and the first key K1, into the original image G1.

Specifically, as illustrated in FIG. 3, in registration (S1a), the image processing device 1 generates a watermarked image G2a by reversibly watermarking the watermarked image G2 with the first key K1 on the basis of the preset second key K2 by using the watermark algorithm B. Then, the image processing device 1 registers the generated watermarked image G2a in the image database 2.

In verification (S2a), the image processing device 1 restores information added as a watermark to the verification target image G3, that is, the first key K1 from the verification target image G3 on the basis of the second key K2 by using the watermark algorithm B. Then, the image processing device 1 restores the information (NFT_ID) added as a watermark to the verification target image G3 on the basis of the restored first key K1 by using the watermark algorithm A. Then, the image processing device 1 returns a result of this restoration as a verification result to the marketplace 100.

In the following description, a case where the watermarked image G2 is generated by using the watermark algorithm A and the first key K1 on the basis of the original image G1, and then the watermarked image G2a is generated by using the watermark algorithm B and the second key K2 will be described as an example of the embodiment. Note that it is needless to say that a case of generating only the watermarked image G2 by using the watermark algorithm A and the first key K1 on the basis of the original image G1 can be implemented by omitting a part of the processing described below.

In the following description, a case where NFT content that is digital art to be made into an NFT is an image such as a JPEG (Joint Photographic Experts Group) image will be described as an example of the embodiment. However, the NFT content is not limited to an image and may be media data such as a moving image and audio, an office document, or the like. That is, the image processing device 1 is an example of an NFT content processing device, and the NFT content processing device may be an information processing device such as a personal computer (PC) that performs similar processing on NFT content (e.g. moving image, audio, and office document) other than a still image. For a data format of the NFT content other than the image, there is a watermark technology similar to that for the image, and thus the NFT content processing device can process the NFT content in a similar manner to the image by using the watermark technology.

### (Image Processing Device According to Embodiment)

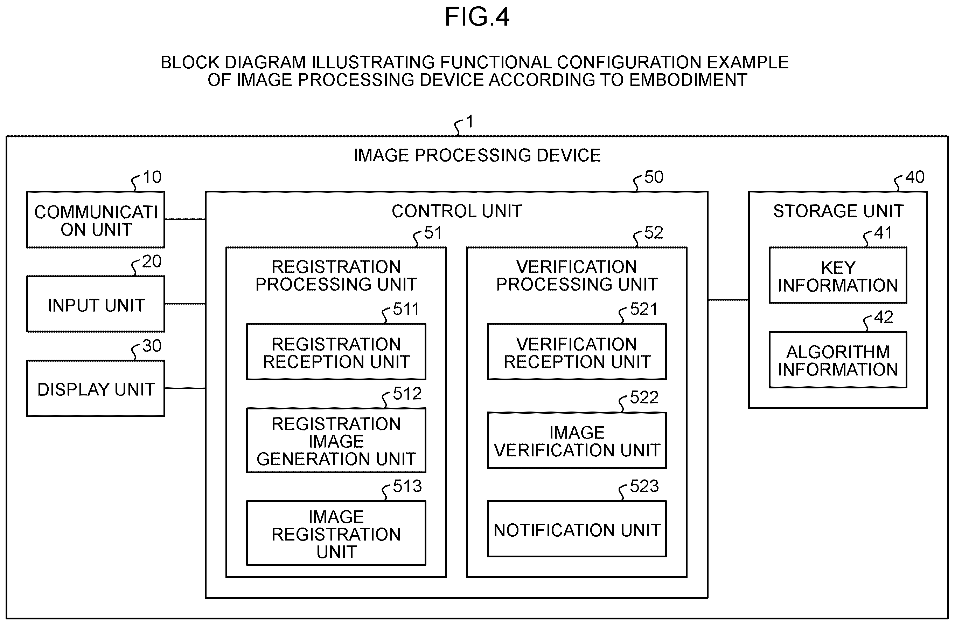

FIG. 4 is a block diagram illustrating a functional configuration example of the image processing device 1 according to the embodiment. As illustrated in FIG. 4, the image processing device 1 includes a communication unit 10, an input unit 20, a display unit 30, a storage unit 40, and a control unit 50.

The communication unit 10 receives various data from an external device via a network. The communication unit 10 is an example of a communication device. For example, the communication unit 10 transmits and receives data related to a registration request and a verification request from the marketplace 100.

The input unit 20 is an input device that inputs various types of information to the control unit 50 of the image processing device 1. The input unit 20 corresponds to a keyboard, a mouse, a touchscreen, or the like. The display unit 30 is a display device that displays information output from the control unit 50.

The storage unit 40 stores data such as key information 41 and algorithm information 42. The storage unit 40 corresponds to a semiconductor memory element such as a random access memory (RAM) or a flash memory or a storage device such as a hard disk drive (HDD).

The key information 41 is data indicating the first key K1, the second key K2, and the like. The key information 41 is generated in advance by, for example, random number generation in the control unit 50 and is stored in the storage unit 40.

The algorithm information 42 is data indicating the watermark algorithm A, the watermark algorithm B, and the like. As the watermark algorithm A and the watermark algorithm B, known image processing algorithms regarding image processing of watermarking an image with information can be applied.

An image region where the watermark algorithm A watermarks an image with information and an image region where the watermark algorithm B watermarks the image with information are different from each other. For example, in a case where the watermark algorithm A watermarks a predetermined region at the upper left of an image with information, the watermark algorithm B watermarks an image region (e.g. a predetermined region at the lower right of the image) different from the region with information. Thus, the image processing device 1 can prevent the information added as a watermark by the watermark algorithm A and the information added as a watermark by the watermark algorithm B from interfering with each other.

The control unit 50 includes a registration processing unit 51 and a verification processing unit 52. The control unit 50 is implemented by, for example, hard wired logic such as a central processing unit (CPU), a graphics processing unit (GPU), an application specific integrated circuit (ASIC), or a field programmable gate array (FPGA).

The registration processing unit 51 is a processing unit that performs processing regarding the registration (S1, S1a). Specifically, the registration processing unit 51 includes a registration reception unit 511, a registration image generation unit 512, and an image registration unit 513.

The registration reception unit 511 is a processing unit that receives a registration request including the original image G1 and the NFT_ID of the original image G1. Specifically, the registration reception unit 511 receives a registration request including the original image G1 and the NFT_ID from the marketplace 100 via a uniform resource identifier (URI) or the like.

The registration image generation unit 512 is a processing unit that generates images (watermarked images G2 and G2a) to be registered in the image database 2 on the basis of the registration request.

Specifically, the registration image generation unit 512 generates the watermarked image G2 by reversibly watermarking the original image G1 received by the registration reception unit 511 with the NFT_ID on the basis of the first key K1 by using the watermark algorithm A indicated by the algorithm information 42 and the first key K1 indicated by the key information 41. Then, the registration image generation unit 512 uses the watermark algorithm B indicated by the algorithm information 42 and the second key K2 indicated by the key information 41 to reversibly watermark the watermarked image G2 with the first key K1 on the basis of the second key K2, thereby generating the watermarked image G2a.

The image registration unit 513 is a processing unit that registers the watermarked images G2 and G2a generated by the registration image generation unit 512 in the image database 2.

The verification processing unit 52 is a processing unit that performs processing regarding the verification (S2, S2a). Specifically, the verification processing unit 52 includes a verification reception unit 521, an image verification unit 522, and a notification unit 523.

The verification reception unit 521 is a processing unit that receives a verification request including the verification target image G3. Specifically, the verification reception unit 521 receives the verification request including the verification target image G3 from the marketplace 100 via a URI or the like.

The image verification unit 522 is a processing unit that acquires a verification result indicating the presence or absence of illegal registration (multiple registration) of the verification target image G3 on the basis of the verification request.

Specifically, the image verification unit 522 restores the information added as a watermark to the verification target image G3, that is, the first key K1 from the verification target image G3 by using the watermark algorithm B indicated by the key information 41 and the second key K2 indicated by the algorithm information 42 on the basis of the second key K2. Then, the image verification unit 522 restores the information (NFT_ID) added as a watermark to the verification target image G3 on the basis of the restored first key K1 by using the watermark algorithm A indicated by the key information 41.

The notification unit 523 is a processing unit that returns (makes a notification of) the verification result (restoration result) of the image verification unit 522.

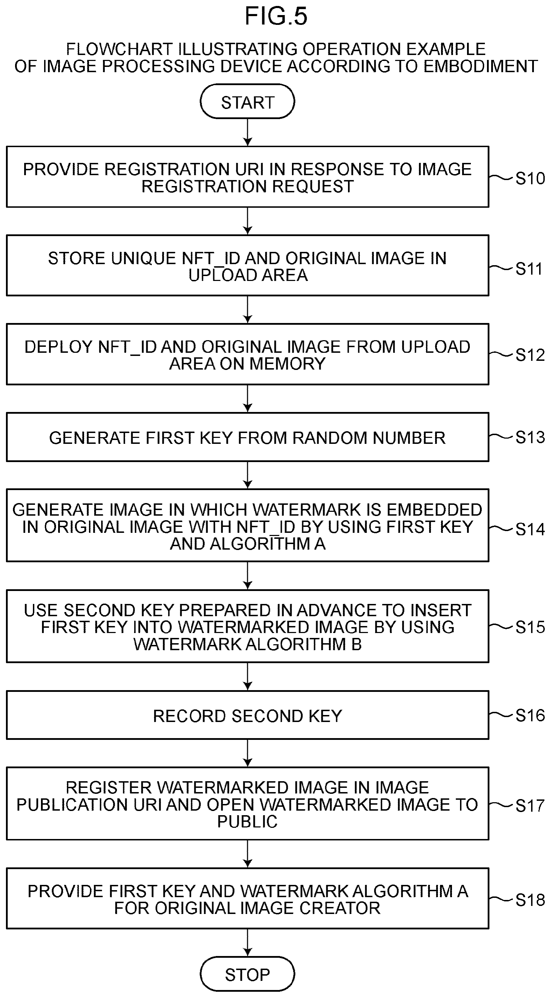

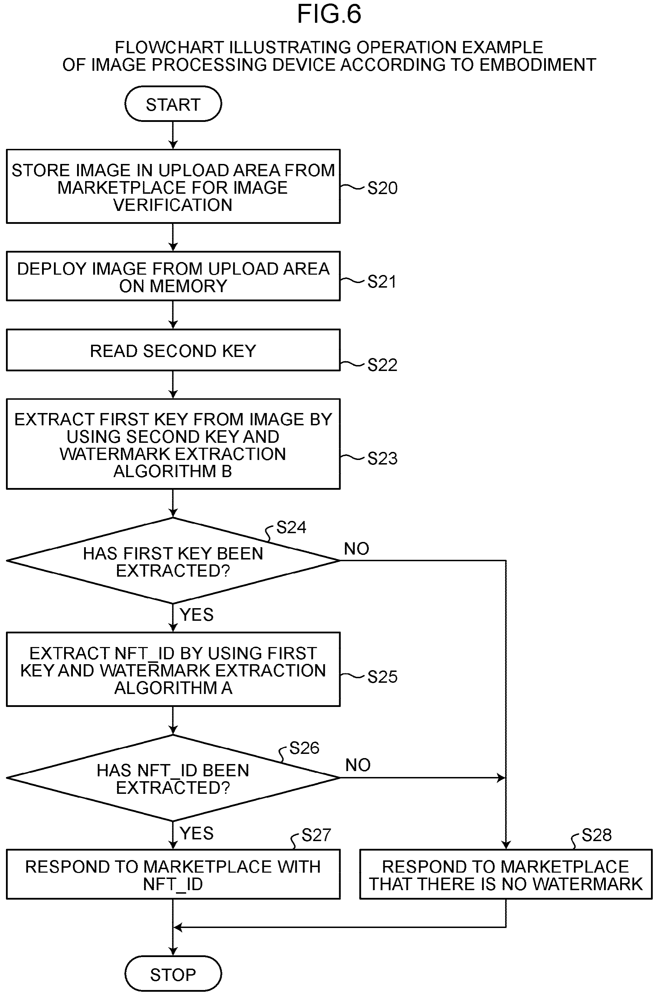

FIGS. 5 and 6 are a flowchart illustrating an operation example of the image processing device 1 according to the embodiment. More specifically, FIG. 5 illustrates an operation example of the image processing device 1 regarding the registration (S1a), and FIG. 6 illustrates an operation example of the image processing device 1 regarding the verification (S2a).

As illustrated in FIG. 5, when the processing regarding the registration (S1a) is started, the registration reception unit 511 provides the marketplace 100 with a registration URI for receiving a registration request in response to an image registration request from the marketplace 100 (S10). Thus, the marketplace 100 stores unique NFT_ID and the original image G1 in an upload area of the registration URI (S11).

The registration reception unit 511 deploys the NFT_ID and the original image G1 received via the upload area of the registration URI on a memory (S12).

Then, the control unit 50 generates the first key K1 from a random number (S13) and stores the first key K1 in the key information 41.

Then, the registration image generation unit 512 generates the watermarked image G2 by watermarking the original image G1 with the NFT_ID on the basis of the first key K1 indicated by the key information 41 by using the watermark algorithm A indicated by the algorithm information 42 (S14).

Then, the registration image generation unit 512 uses the second key K2 prepared in advance by random number generation or the like to insert the first key K1 into the watermarked image G2 by using the watermark algorithm B, thereby generating the watermarked image G2a (S15). Then, the registration image generation unit 512 records the second key K2 in the key information 41 (S16).

Then, the image registration unit 513 registers the generated watermarked image G2a in an image publication URI in the image database 2 and opens the watermarked image G2a to the public (S17).

Then, the image registration unit 513 provides the first key K1 and the watermark algorithm A for the creator 3 of the original image G1 (S18) and ends the processing.

As illustrated in FIG. 6, when the processing regarding the verification (S2a) is started, the verification target image G3 for image verification is stored from the marketplace 100 in an upload area of the verification reception unit 521 (S20). Then, the verification reception unit 521 deploys the verification target image G3 from the upload area on the memory (S21).

Then, the image verification unit 522 reads the second key K2 indicated by the key information 41 (S22). Then, the image verification unit 522 restores and extracts the first key K1 from the verification target image G3 by using the second key K2 and the watermark algorithm B indicated by the algorithm information 42 (S23).

Then, the image verification unit 522 determines whether or not the first key K1 has been extracted from the verification target image G3 (S24). Specifically, the image verification unit 522 determines whether or not data corresponding to the format of the first key K1 has been restored from the verification target image G3 and determines the result as a restoration error when the data corresponding to the format of the first key K1 has not been restored.

When the result is a restoration error, and the first key K1 has not been extracted from the verification target image G3 (S24: No), the image verification unit 522 advances the processing to S28.

When the first key K1 has been extracted from the verification target image G3 without causing a restoration error (S24: Yes), the image verification unit 522 restores and extracts NFT_ID from the verification target image G3 by using the extracted first key K1 and the watermark algorithm A indicated by the algorithm information 42 (S25).

Then, the image verification unit 522 determines whether or not the NFT_ID has been extracted from the verification target image G3 (S26). Specifically, the image verification unit 522 determines whether or not data corresponding to the format of the NFT_ID has been restored from the verification target image G3 and determines the result as a restoration error when the data corresponding to the format of the NFT_ID has not been restored.

When the result is a restoration error, and the NFT_ID has not been extracted from the verification target image G3 (S26: No), the image verification unit 522 advances the processing to S28.

When the NFT_ID has been extracted from the verification target image G3 without causing a restoration error (S26: Yes), the notification unit 523 responds to the marketplace 100 with the extracted NFT_ID (S27) and ends the processing.

In S28, the notification unit 523 responds to the marketplace 100 that there is no watermark (NFT_ID has not been extracted) and ends the processing.

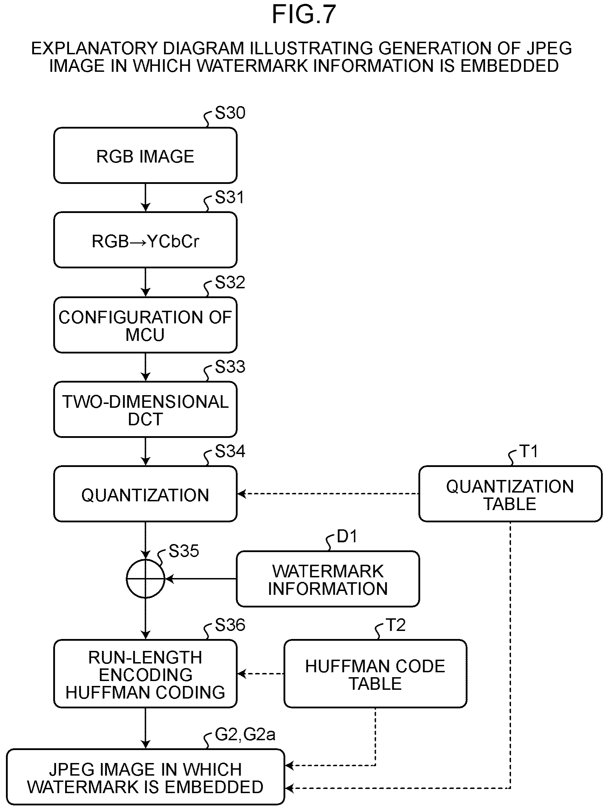

Here, watermarking an image in the embodiment will be described in detail with reference to FIGS. 7 to 11. FIG. 7 is an explanatory diagram illustrating generation of a JPEG image in which watermark information is embedded.

As illustrated in FIG. 7, the registration image generation unit 512 of the image processing device 1 may generate a JPEG image in which watermark information is embedded as the watermarked image G2 or G2a on the basis of the original image G1.

Specifically, in a flow of general JPEG compression processing (S30 to S34, S36), the registration image generation unit 512 performs quantization using a quantization table T1 (S34) and then performs processing of embedding watermark information D1 such as the first key K1 and NFT_ID (S35). Then, the registration image generation unit 512 performs run-length encoding and Huffman coding using a Huffman code table T2 (S36) to obtain the watermarked image G2 or G2a as a JPEG image in which the watermark information D1 is embedded.

In JPEG compression, an operation (run-length encoding and Huffman coding (S36)) after the quantization (S34) is reversible. Therefore, the verification reception unit 521 can completely extract the embedded watermark information D1 by performing Huffman decoding and run-length decoding on JPEG-compressed data.

Here, a minimum coded unit (MCU) used to obtain the watermarked image G2 or G2a as a JPEG image in which the watermark information D1 is embedded on the basis of the original image G1 is referred to as a block in the following description.

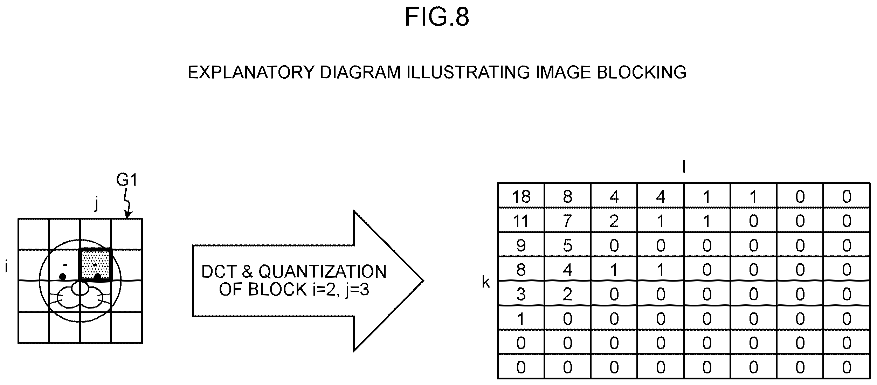

FIG. 8 is an explanatory diagram illustrating image blocking. As illustrated in FIG. 8, the registration image generation unit 512 divides the original image G1 into, for example, 8 × 8 pixel blocks (i, j). Then, the registration image generation unit 512 performs two-dimensional discrete cosine transform (DCT) and quantization using the quantization table T1 for each block. By performing DCT and quantization in this manner, the registration image generation unit 512 obtains 8 × 8 quantized DCT coefficients (l, k).

The registration image generation unit 512 inserts the watermark information D1 into the DCT coefficient (l, k) of each block (i, j) obtained in this manner by using the watermark algorithms A and B on the basis of the first key K1 and the second key K2.

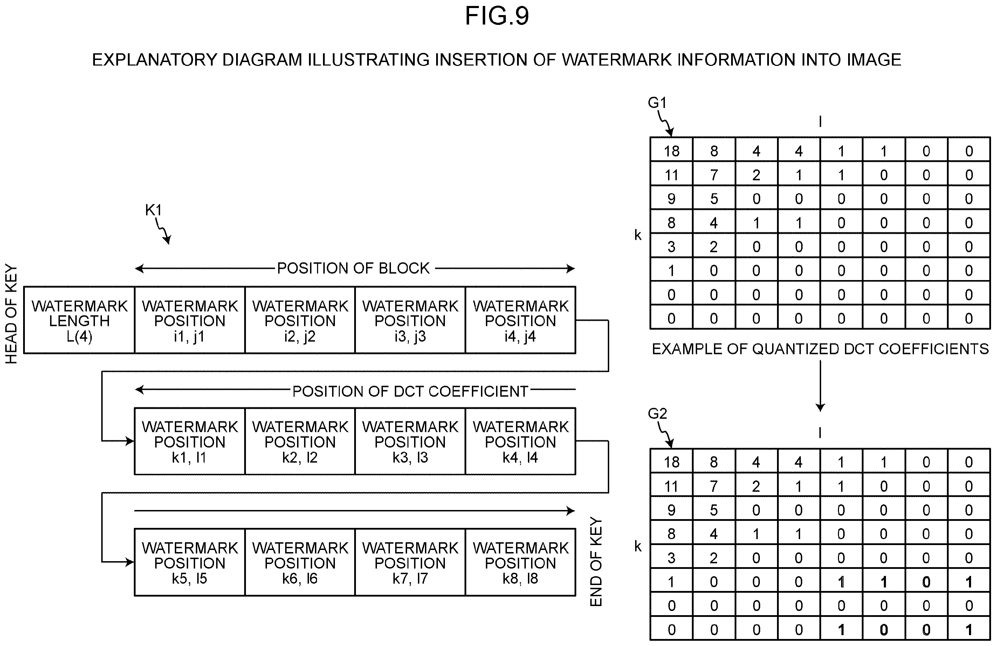

FIG. 9 is an explanatory diagram illustrating insertion of the watermark information D1 into an image. As illustrated in FIG. 9, the first key K1 includes a watermark length L(4) and watermark positions (positions of blocks, positions of DCT coefficients) in the image between the head and the end of the key. Although not particularly illustrated, the second key K2 also has a similar configuration.

Watermark information of a 1-byte sentence is stored in each block, and in the first key K1, into which block position the watermark information is to be inserted is a part of key information (in, in). In the watermark algorithms A and B, in each block, a bit string of a watermark is stored in the least significant bit of the DCT coefficient into which the watermark is inserted. In the first key K1, into which position in the block a watermark of 1 byte = 8 bits is inserted is a part of the key information (kn, ln).

Sets of i and j or sets of k and j are set so as not to overlap between the first key K1 and the second key K2. This makes it possible to prevent information added as a watermark to the first key K1 and the second key K2 from interfering with each other.

The right side of FIG. 9 illustrates a case where the watermarked image G2 is generated by inserting the watermark information D1 of (11011001) into the DCT coefficient quantized in the original image G1. The image verification unit 522 can obtain the watermark information D1 from the watermarked image G2 by performing inverse transform on the basis of the above first key K1 and second key K2.

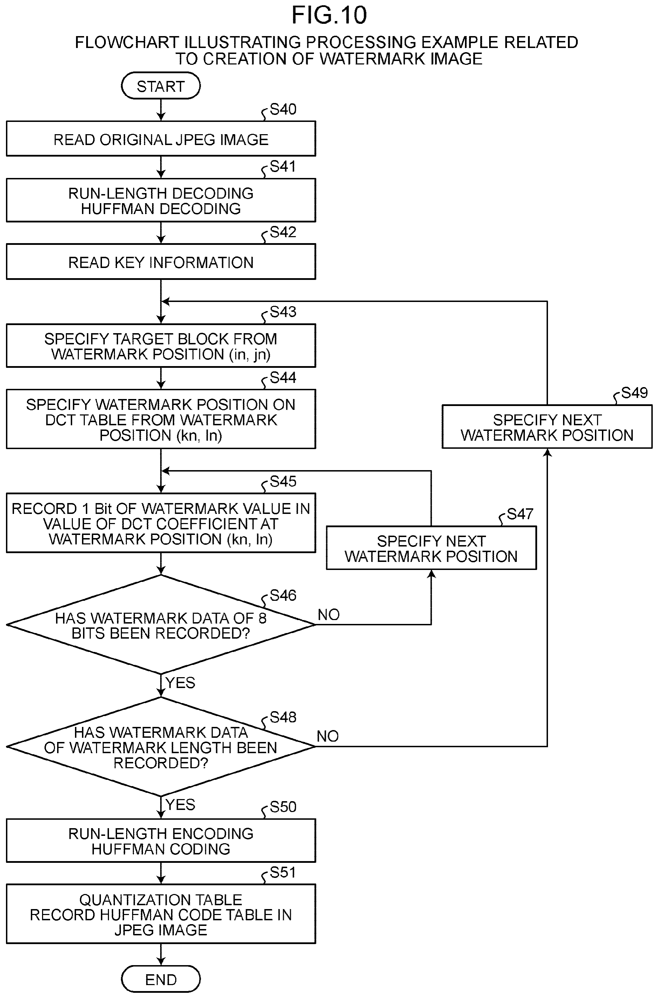

FIG. 10 is a flowchart illustrating a processing example related to creation of a watermarked image. Here, a case where the registration image generation unit 512 generates the watermarked image G2 will be described, but it is needless to say that the same applies to generation of the watermarked image G2a.

As illustrated in FIG. 10, the registration image generation unit 512 reads an original JPEG image (original image G1) (S40) and performs run-length decoding and Huffman decoding (S41).

Then, the registration image generation unit 512 reads the key information 41 regarding the first key K1 (S42). Then, the registration image generation unit 512 specifies a target block from the watermark position (in, jn) included in the key information 41 (S43). Then, the registration image generation unit 512 specifies a watermark position on the DCT table from the watermark position (kn, ln) included in the key information 41 (S44).

Then, the registration image generation unit 512 records 1 bit of a watermark value included in the watermark information D1 in the value of the DCT coefficient at the watermark position (kn, ln) (S45).

Then, the registration image generation unit 512 determines whether or not the watermark information D1 of 8 bits has been recorded (S46), specifies the next watermark position when the watermark information D1 has not been recorded (S46: No) (S47), and returns the processing to S45.

When the watermark information D1 of 8 bits has been recorded (S46: Yes), the registration image generation unit 512 determines whether or not the watermark information D1 of the watermark length has been recorded (S48), specifies the next watermark position when the watermark information D1 has not been recorded (S48: No) (S49), and returns the processing to S43.

When the watermark information D1 of the watermark length has been recorded (S48: Yes), the registration image generation unit 512 performs run-length encoding and Huffman coding on the image in which the watermark information D1 has been recorded (S50), thereby obtaining a JPEG image. Then, the registration image generation unit 512 records the quantization table T1 and the Huffman code table T2 in the JPEG image (S51) and ends the processing.

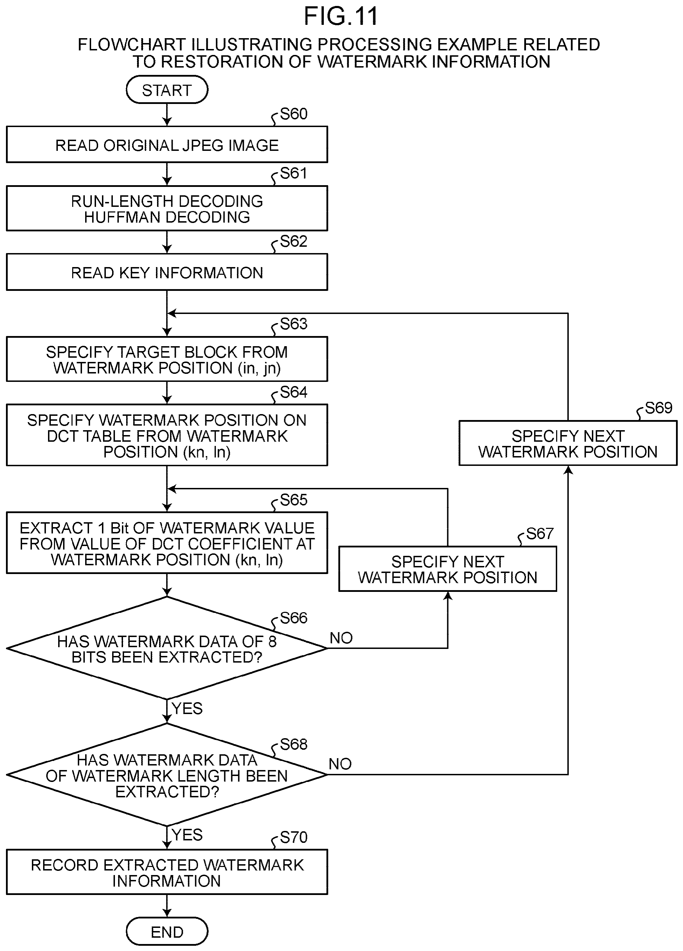

FIG. 11 is a flowchart illustrating a processing example related to restoration of the watermark information. Here, a case where the image verification unit 522 performs restoration using the first key K1 will be described, but it is needless to say that the same applies to restoration of the second key K2.

As illustrated in FIG. 11, the image verification unit 522 reads an original JPEG image (verification target image G3) (S60) and performs run-length decoding and Huffman decoding (S61).

Next, the image verification unit 522 reads the key information 41 regarding the first key K1 (S62). Then, the image verification unit 522 specifies a target block from the watermark position (in, jn) included in the key information 41 (S63). Then, the image verification unit 522 specifies a watermark position on the DCT table from the watermark position (kn, ln) included in the key information 41 (S64).

Then, the image verification unit 522 extracts 1 bit of the watermark value from the value of the DCT coefficient at the watermark position (kn, ln) (S65).

Then, the image verification unit 522 determines whether or not the watermark information D1 of 8 bits has been extracted (S66), specifies the next watermark position when the watermark information D1 has not been extracted (S66: No) (S67), and returns the processing to S65.

When the watermark information D1 of 8 bits has been extracted (S66: Yes), the image verification unit 522 determines whether or not the watermark information D1 of the watermark length has been extracted (S68), specifies the next watermark position when the watermark information D1 has not been extracted (S68: No) (S69), and returns the processing to S63.

When the watermark information D1 of the watermark length has been extracted (S68: Yes), the image verification unit 522 records the extracted watermark information D1 (S70), and ends the processing.

### (Effects)

As described above, when receiving a registration request including a first image to be registered (original image G1) and identification information for identifying the first image, the image processing device 1 generates a second image (watermarked image G2) in which the first image has been reversibly watermarked with NFT_ID on the basis of the first key K1 by using a first algorithm and registers the generated image. When receiving a verification request including a third image to be verified (verification target image G3), the image processing device 1 restores identification information added as a watermark to the third image from the third image on the basis of the first key K1 by using the first algorithm and makes a notification of a verification result based on the restoration.

Therefore, the image processing device 1 can easily suppress illegal registration of digital art without performing processing that greatly consumes computer resources and time such as collation with all registered images.

The image processing device 1 further generates a fourth image (watermarked image G2a) by reversibly watermarking the second image with the first key K1 on the basis of the second key K2 by using a second algorithm and registers the generated image. The image processing device 1 restores information added as a watermark to the third image on the basis of the second key K2 from the third image by using the second algorithm and then restores NFT_ID added as a watermark to the third image on the basis of the restored information by using the first algorithm. By watermarking the image on the basis of a plurality of keys as described above, the image processing device 1 can make it more difficult to restore the NFT_ID. This makes it possible to more reliably prevent illegal registration of digital art by the illegal registrant 4.

At least one of the first key K1 and the second key K2 includes a watermark position at which the image is watermarked with information. Therefore, the image processing device 1 can change the watermark position of the information on the image by using the first key K1 and the second key K2. The watermark position may be prevented from being easily specified by changing the watermark position in this manner.

The first algorithm and the second algorithm watermark the image with information at different positions. Therefore, in a case where the image is watermarked with information by using the first algorithm and the second algorithm, the image processing device 1 can prevent the information added as a watermark from interfering with each other.

### (Others)

Each component of each device illustrated in the drawings is not necessarily physically configured as illustrated in the drawings. That is, a specific form of distribution and integration of each device is not limited to the illustrated form, and all or a part thereof can be functionally or physically distributed and integrated in an arbitrary unit according to various loads, usage conditions, and the like.

All or any part of various processing functions such as the registration processing unit 51 and the verification processing unit 52 performed in the control unit 50 of the image processing device 1 may be executed on a CPU (or a microcomputer such as an MPU or a micro controller unit (MCU)). It is needless to say that all or any part of the various processing functions may be executed on a program analyzed and executed by a CPU (or a microcomputer such as an MPU or an MCU) or on hardware by wired logic. The various processing functions performed by the image processing device 1 may be executed by a plurality of computers in cooperation by cloud computing.

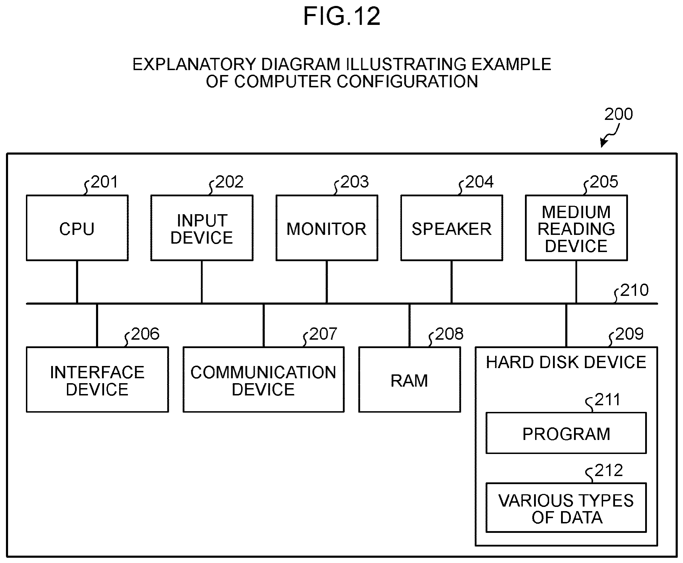

The various types of processing described in the above embodiment can be implemented by executing a program prepared in advance on a computer. Therefore, an example of a computer configuration (hardware) that executes a program having functions similar to those of the above embodiment will be described below. FIG. 12 is an explanatory diagram illustrating the example of the computer configuration.

As illustrated in FIG. 12, a computer 200 includes a CPU 201 that executes various types of arithmetic processing, an input device 202 that receives data input, a monitor 203, and a speaker 204. The computer 200 also includes a medium reading device 205 that reads a program and the like from a storage medium, an interface device 206 for connecting to various devices, and a communication device 207 for communicating and connecting to an external device in a wired or wireless manner. The image processing device 1 further includes a RAM 208 that temporarily stores various types of information and a hard disk device 209. The units (201 to 209) in the computer 200 are connected to a bus 210.

The hard disk device 209 stores a program 211 for executing various types of processing in the functional configuration (registration processing unit 51, verification processing unit 52, and the like) described in the above embodiment. The hard disk device 209 stores various types of data 212 referred to by the program 211. The input device 202 receives an input of operation information from an operator, for example. The monitor 203 displays, for example, various screens operated by the operator. For example, a printing device or the like is connected to the interface device 206. The communication device 207 is connected to a communication network such as a local area network (LAN) and exchanges various types of information with an external device via the communication network.

The CPU 201 performs various types of processing regarding the above functional configuration (registration processing unit 51, verification processing unit 52, and the like) by reading the program 211 stored in the hard disk device 209, deploying the program in the RAM 208, and executing the program. The program 211 may or may not be stored in the hard disk device 209. For example, the program 211 stored in a storage medium readable by the computer 200 may be read and executed. The storage medium readable by the computer 200 corresponds to, for example, a portable recording medium such as a CD-ROM, a DVD disk, or a universal serial bus (USB) memory, a semiconductor memory such as a flash memory, or a hard disk drive. Alternatively, the program 211 may be stored in a device connected to a public line, the Internet, a LAN, or the like, and the computer 200 may read and execute the program 211 therefrom.

Regarding the above embodiment, the following supplementary notes are further disclosed.

(Supplementary note 1) An NFT content processing program for causing a computer to execute processing of:
when receiving a registration request including first NFT content to be registered and identification information (NFT_ID) for identifying the first NFT content, generating second NFT content in which the first NFT content is reversibly watermarked with the identification information on the basis of a predetermined first key by using a first algorithm;
registering the generated NFT content;
when receiving a verification request including third NFT content to be verified, restoring identification information added as a watermark to the third NFT content from the third NFT content on the basis of the first key by using the first algorithm; and
making a notification of a verification result based on the restoration of the identification information added as a watermark to the third NFT content.

(Supplementary note 2) The NFT content processing program according to Supplementary note 1, in which:
in the generation processing, fourth NFT content in which the second NFT content is reversibly watermarked with the first key on the basis of a predetermined second key by using a second algorithm is further generated; and
in the restoration processing, information added as a watermark to the third NFT content is restored from the third NFT content on the basis of the second key by using the second algorithm, and then the identification information added as a watermark to the third NFT content is restored on the basis of the restored information by using the first algorithm.

(Supplementary note 3) The NFT content processing program according to Supplementary note **2,** in which
at least one of the first key or the second key includes a watermark position at which the NFT content is watermarked with information.

(Supplementary note 4) The NFT content processing program according to Supplementary note **2,** in which
the first algorithm and the second algorithm watermark the NFT content with information at different positions.

(Supplementary note 5) An NFT content processing method, in which
a computer executes processing of:
when receiving a registration request including first NFT content to be registered and identification information for identifying the first NFT content, generating second NFT content in which the first NFT content is reversibly watermarked with the identification information on the basis of a predetermined first key by using a first algorithm;
registering the generated NFT content;
when receiving a verification request including third NFT content to be verified, restoring identification information added as a watermark to the third NFT content from the third NFT content on the basis of the first key by using the first algorithm; and
making a notification of a verification result based on the restoration of the identification information added as a watermark to the third NFT content.

(Supplementary note 6) The NFT content processing method according to supplementary note 5, in which:
in the generation processing, fourth NFT content in which the second NFT content is reversibly watermarked with the first key on the basis of a predetermined second key by using a second algorithm is further generated; and
in the restoration processing, information added as a watermark to the third NFT content is restored from the third NFT content on the basis of the second key by using the second algorithm, and then the identification information added as a watermark to the third NFT content is restored on the basis of the restored information by using the first algorithm.

(Supplementary note 7) The NFT content processing method according to supplementary note 6, in which
at least one of the first key or the second key includes a watermark position at which the NFT content is watermarked with information.

(Supplementary note 8) The NFT content processing method according to supplementary note 6, in which
the first algorithm and the second algorithm watermark the NFT content with information at different positions.

(Supplementary note 9) An NFT content processing device including a control unit that executes processing of:
when receiving a registration request including first NFT content to be registered and identification information for identifying the first NFT content, generating second NFT content in which the first NFT content is reversibly watermarked with the identification information on the basis of a predetermined first key by using a first algorithm;
registering the generated NFT content;
when receiving a verification request including third NFT content to be verified, restoring identification information added as a watermark to the third NFT content from the third NFT content on the basis of the first key by using the first algorithm; and
making a notification of a verification result based on the restoration of the identification information added as a watermark to the third NFT content.

(Supplementary note 10) The NFT content processing device according to supplementary note 9, in which:
in the generation processing, fourth NFT content in which the second NFT content is reversibly watermarked with the first key on the basis of a predetermined second key by using a second algorithm is further generated; and
in the restoration processing, information added as a watermark to the third NFT content is restored from the third NFT content on the basis of the second key by using the second algorithm, and then the identification information added as a watermark to the third NFT content is restored on the basis of the restored information by using the first algorithm.

(Supplementary note 11) The NFT content processing device according to supplementary note 10, in which
at least one of the first key or the second key includes a watermark position at which the NFT content is watermarked with information.

(Supplementary note 12) The NFT content processing device according to supplementary note 10, in which
the first algorithm and the second algorithm watermark the NFT content with information at different positions.

### [Explanation of Reference]

1 IMAGE PROCESSING DEVICE
2 IMAGE DATABASE
3 CREATOR
4 ILLEGAL REGISTRANT
10 COMMUNICATION UNIT
20 INPUT UNIT
30 DISPLAY UNIT
40 STORAGE UNIT
41 KEY INFORMATION
42 ALGORITHM INFORMATION
50 CONTROL UNIT
51 REGISTRATION PROCESSING UNIT
52 VERIFICATION PROCESSING UNIT
100 MARKETPLACE
200 COMPUTER
201 CPU
202 INPUT DEVICE
203 MONITOR
204 SPEAKER
205 MEDIUM READING DEVICE
206 INTERFACE DEVICE
207 COMMUNICATION DEVICE
208 RAM
209 HARD DISK DEVICE
210 BUS
211 PROGRAM
212 VARIOUS TYPES OF DATA
511 REGISTRATION RECEPTION UNIT
512 REGISTRATION IMAGE GENERATION UNIT
513 IMAGE REGISTRATION UNIT
521 VERIFICATION RECEPTION UNIT
522 IMAGE VERIFICATION UNIT
523 NOTIFICATION UNIT
BC BLOCKCHAIN
D1 WATERMARK INFORMATION
G1 ORIGINAL IMAGE
G2, G2a WATERMARKED IMAGE
G3 VERIFICATION TARGET IMAGE
K1 FIRST KEY
K2 SECOND KEY
NFT_ID IDENTIFICATION INFORMATION
T1 QUANTIZATION TABLE
T2 HUFFMAN CODE TABLE

## Claims

1. An NFT content processing program that causes a computer to execute processing of:
when receiving a registration request including first NFT content to be registered and identification information (NFT_ID) for identifying the first NFT content, generating second NFT content in which the first NFT content is reversibly watermarked with the identification information based on a predetermined first key by using a first algorithm;
registering the generated NFT content;
when receiving a verification request including third NFT content to be verified, restoring identification information added as a watermark to the third NFT content from the third NFT content based on the first key by using the first algorithm; and
making a notification of a verification result based on the restoration of the identification information added as a watermark to the third NFT content.

2. The NFT content processing program according to claim 1, wherein:
in the generation processing, fourth NFT content in which the second NFT content is reversibly watermarked with the first key based on a predetermined second key by using a second algorithm is further generated; and
in the restoration processing, information added as a watermark to the third NFT content is restored from the third NFT content based on the second key by using the second algorithm, and then the identification information added as a watermark to the third NFT content is restored based on the restored information by using the first algorithm.

3. The NFT content processing program according to claim **2,** wherein
at least one of the first key or the second key includes a watermark position at which the NFT content is watermarked with information.

4. The NFT content processing program according to claim **2,** wherein
the first algorithm and the second algorithm watermark the NFT content with information at different positions.

5. An NFT content processing method, wherein
a computer executes processing of:
when receiving a registration request including first NFT content to be registered and identification information for identifying the first NFT content, generating second NFT content in which the first NFT content is reversibly watermarked with the identification information based on a predetermined first key by using a first algorithm;
registering the generated NFT content;
when receiving a verification request including third NFT content to be verified, restoring identification information added as a watermark to the third NFT content from the third NFT content based on the first key by using the first algorithm; and
making a notification of a verification result based on the restoration of the identification information added as a watermark to the third NFT content.

6. The NFT content processing method according to claim 5, wherein:
in the generation processing, fourth NFT content in which the second NFT content is reversibly watermarked with the first key based on a predetermined second key by using a second algorithm is further generated; and
in the restoration processing, information added as a watermark to the third NFT content is restored from the third NFT content based on the second key by using the second algorithm, and then the identification information added as a watermark to the third NFT content is restored based on the restored information by using the first algorithm.

7. The NFT content processing method according to claim 6, wherein
at least one of the first key or the second key includes a watermark position at which the NFT content is watermarked with information.

8. The NFT content processing method according to claim 6, wherein
the first algorithm and the second algorithm watermark the NFT content with information at different positions.

9. An NFT content processing device comprising a control unit configured to execute processing of:
when receiving a registration request including first NFT content to be registered and identification information for identifying the first NFT content, generating second NFT content in which the first NFT content is reversibly watermarked with the identification information based on a predetermined first key by using a first algorithm;
registering the generated NFT content;
when receiving a verification request including third NFT content to be verified, restoring identification information added as a watermark to the third NFT content from the third NFT content based on the first key by using the first algorithm; and
making a notification of a verification result based on the restoration of the identification information added as a watermark to the third NFT content.

10. The NFT content processing device according to claim 9, wherein:
in the generation processing, fourth NFT content in which the second NFT content is reversibly watermarked with the first key based on a predetermined second key by using a second algorithm is further generated; and
in the restoration processing, information added as a watermark to the third NFT content is restored from the third NFT content based on the second key by using the second algorithm, and then the identification information added as a watermark to the third NFT content is restored based on the restored information by using the first algorithm.

11. The NFT content processing device according to claim 10, wherein
at least one of the first key or the second key includes a watermark position at which the NFT content is watermarked with information.

12. The NFT content processing device according to claim 10**,** wherein
the first algorithm and the second algorithm watermark the NFT content with information at different positions.
